# EUROPÄISCHE PATENTANMELDUNG

(11) **EP 1 762 290 A1**
(43) Veröffentlichungstag der Anmeldung: **14.03.2007**
(21) Anmeldenummer: 05019737.5
(22) Anmeldetag: 10.09.2005
(51) Int. Cl.: B01D 24/00, B01D 24/48, B01D 35/30

(54) **Modulare Filteranlage**

(71) Anmelder: Aqua Floataris GmbH, 13581 Berlin (DE)
(72) Erfinder: Wolfgang, Nicolaus, 13589 Berlin (DE)
(74) Vertreter: Scholz, Hartmut

(57) **Zusammenfassung**

Filteranlage (10) zum Filtern von Flüssigkeiten, insbesondere von Wässern in Badeanlagen, Swimmingpools, Schwimmbädern und dergleichen, bestehend aus einer Vielzahl von Schichten mit unterschiedlich grobem und/oder reaktivem Filtermaterial (28, 28a, 28b, 28c), das von dem zu filternden Wasser nacheinander durchströmt werden kann. Jedes Filtermaterial (28, 28a, 28b, 28c) ist in einem eigenen, von Wasser durchströmbaren Filtermaterialbehältnis (26, 26a, 26b, 26c) bereit gehalten. Die Filtermaterialbehältnisse (26, 26a, 26b, 26c) sind in Reihe hinter einander angeordnet und werden von Filterkonsolen (19, 20, 21, 22) gehalten, die einzeln aus der Filteranlage (10) ausgefahren werden können.

## Beschreibung

Die Erfindung betrifft eine Filteranlage zum Filtern von Flüssigkeiten, insbesondere von Wässern in Badeanlagen, Swimmingpools, Schwimmbädern und dergleichen, bestehend aus einer Vielzahl von Schichten mit unterschiedlich grobem und/oder reaktivem Filtermaterial, das in Durchströmrichtung von dem zu filternden Wasser nacheinander zu durchströmen ist.

Derartige Filteranlagen sind allgemein bekannt und dienen der periodischen Reinigung der Wasserfüllungen von Swimmingpools, Wannenbädern, Badeanstalten und dergleichen. Dazu werden Filtermaterialien der unterschiedlichsten Körnung schichtweise übereinander in ein Filtergehäuse eingefüllt. Das zu reinigende Wasser durchströmt dann nacheinander die einzelnen Filterschichten.

Dabei bleiben Verunreinigungen in dem Filtermaterial hängen und die Filterwirkung lässt allmählich nach. Die Filter müssen deshalb in bestimmten Perioden gereinigt werden. Dies geschieht üblicherweise durch eine sog. Gegenstromspülung, bei der Reinigungswasser entgegen der eigentlichen Durchströmrichtung durch den Filter geführt wird.

Bei einer derartigen Gegenstromspülung kommt es ständig zu einer Durchmischung der verschiedenen Filtermaterialien, wobei das feinere Filtermaterial von unten nach oben bewegt wird und sich in die Zwischenräume des gröberen Filtermaterials der nächsten Filtermaterialschichten absetzt. Üblicherweise wird auch eine Schicht von Aktivkohle eingesetzt, die bei der Gegenspülung ebenfalls im gesamten Filter verteilt werden kann. Sobald diese Verteilung des Filtermaterials über die gesamte Filterhöhe erfolgt ist, kann der Filter nur noch eingeschränkt arbeiten und muss ausgewechselt werden.

Aufgabe der vorliegenden Erfindung ist es, einen Filter der eingangs beschriebenen Art zu schaffen, bei dem eine Durchmischung des Filtermaterials vermieden wird und die einzelnen Filtermaterialien leicht und einfach auswechselbar sind.

Gelöst wird diese Aufgabe dadurch, dass jedes Filtermaterial in einem Filtermodul mit jeweils einem eigenen Filtermaterialbehältnis bereit gehalten ist, die Filtermodule in Reihe hintereinander angeordnet sind und die einzelnen Filtermaterialbehältnisse aus den Filtermodulen entnehmbar sind.

Dabei ist es in vorteilhafter Weise vorgesehen, dass die Filtermodule separat ausfahrbare Filterkonsolen aufweisen, die in einem Rahmengestänge angeordnet und in Durchströmrichtung axial verschiebbar sind.

Durch diese Maßnahme wird eine Filteranlage geschaffen, bei der die einzelnen Filtermaterialschichten in separaten Filtermaterialbehältnissen angeordnet sind. In jedem Filtermaterialbehältnis wird dabei nur ein einheitliches Filtermaterial bereitgehalten. Diese Filtermaterialbehältnisse sind oben und unten mit Abdecksieben verschlossen. Die Abdecksiebe sind so ausgebildet, dass lediglich Wasser nicht aber Filtermaterial durchtreten kann.

Die einzelnen Filtermaterialbehältnisse sind mit Filterkonsolen zu Filtermodulen zusammen gefasst und in ein Rahmengestänge eingehängt. Die einzelnen Filtermodule sind in dem Rahmengestänge geführt und können durch ein geeignetes Hubmittel auseinander gezogen werden.

Nach dem Auseinanderziehen kann jedes einzelne der Filtermodule mitsamt dem eingehängten Filtermaterialbehältnis seitlich herausgezogen werden. Die Filtermaterialbehältnisse können dann mit einer geeigneten Handhabe aus ihrer Filterkonsole herausgenommen und durch ein neues mit unverbrauchtem Filtermaterial versehenes Filtermaterialbehältnis ersetzt werden. Die Filtermaterialbehältnisse sind dabei so dimensioniert, dass sie im Einmannbetrieb herausgehoben werden können.

Das ausgewechselte Filtermaterial kann entweder separat gereinigt oder entsorgt werden. Dadurch kann auf den Einsatz der relativ großen Menge Spülwasser verzichtet werden.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: die Vorderansicht einer Filteranlage mit einem Rahmengestänge, in dem einzelne, mit unterschiedlichen Filtermaterialien bestückte Filtermodule verschiebbar geführt sind;
- **Figur 2**: die Vorderansicht einer Filteranlage mit unterschiedlich bestückten Filtermodulen nach der Figur 1, geschnitten;
- **Figur 3**: die Seitenansicht einer Filteranlage nach der Figur 1, mit einem an einer Filterkonsole ausgefahrenen Filtermodul und austauschbarem Filtermaterialbehältnis.

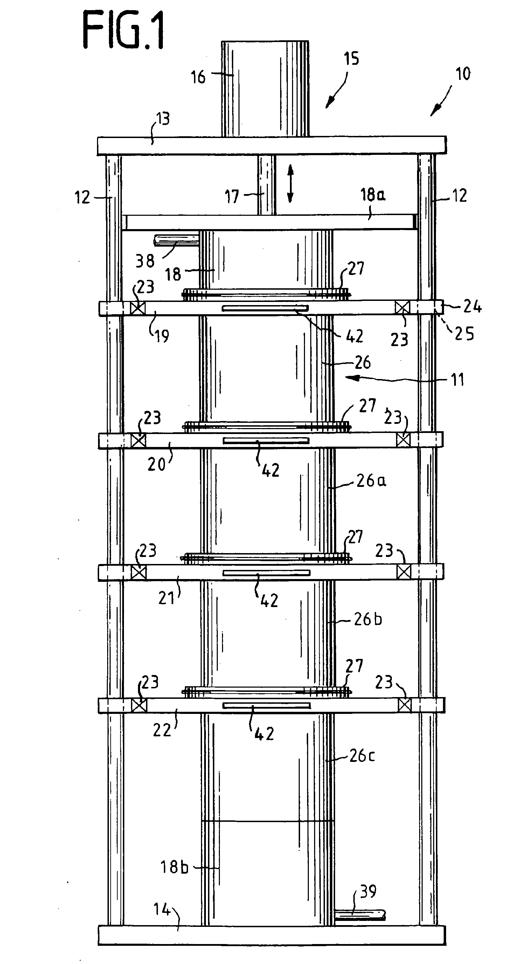

Die in der Figur 1 dargestellte Filteranlage 10 besteht im Wesentlichen aus einem Rahmengestänge 12, in dem Filtermodule 11 geführt sind. Das Rahmengestänge 12 weist eine im Wesentlichen quadratische Grundfläche auf und ist in Einbaulage oben mit einer Kopfplatte 13 und unten mit einer Bodenplatte 14 versehen.

Auf der Kopfplatte 13 ist eine Hubvorrichtung 15 angeordnet, die mit einem Hubzylinder 16 versehen ist. Der Hubzylinder 16 weist eine Hubstange 17 auf, die durch die Kopfplatte 13 geführt ist. Unterhalb der Kopfplatte 13 ist ein oberer Wasserkasten 18 vorgesehen, der mit einer Wasserkastenabdeckung 18a verschlossen ist.

Die durch die Kopfplatte 13 geführte Hubstange 17 der Hubvorrichtung 15 ist fest mit der Wasserkastenabdeckung 18a verbunden. Mit der Hubvorrichtung 15 können die Filtermodule 11 angehoben und abgesenkt werden (Doppelpfeil). Mit der Bodenplatte 14 ist ein unterer Wasserkasten 18b nach unten abgeschlossen.

Dem oberen Wasserkasten 18 ist ein Wasserzulauf 38 zugeordnet, und dem unteren Wasserkasten 18b ist ein Wasserablauf 39 zugeordnet.

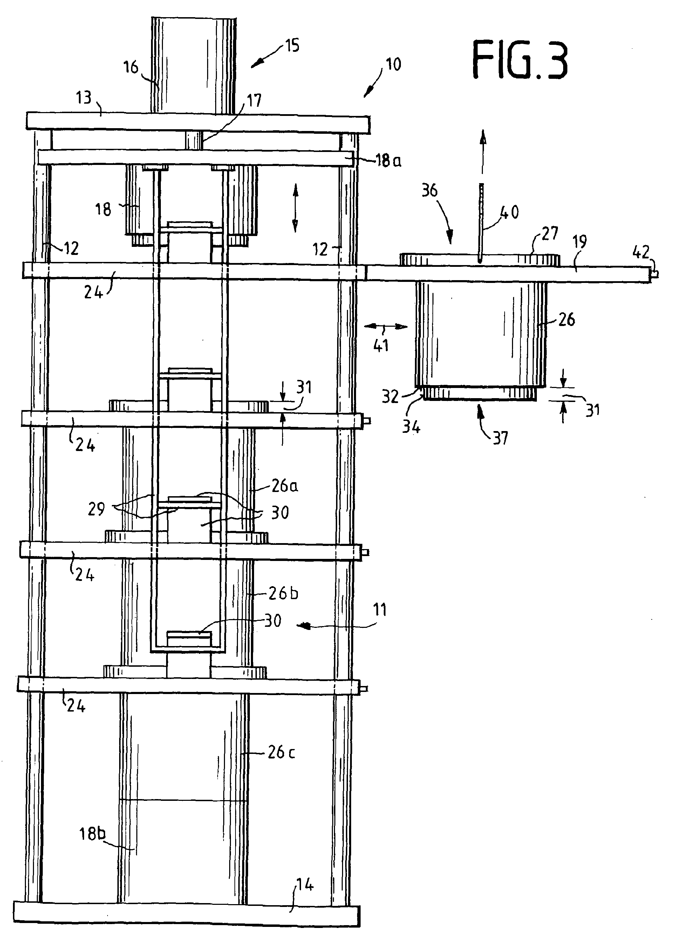

Die Filtermodule 11 bestehen jeweils aus einer Filterkonsole 19, 20, 21 oder 22, die bei dem gezeigten Ausführungsbeispiel in Einbaulage übereinander angeordnet sind. Bei einem anderen Ausführungsbeispiel können die Filterkonsolen 19, 20, 21 oder 22 auch in Reihe geschaltet nebeneinander angeordnet sein. Die Filterkonsolen 19, 20, 21 und 22 können in Konsolenführungen 23 seitlich ausgefahren werden, wie dies in der Figur 3 dargestellt ist.

Die Konsolenführungen 23 sind mittels Gestängeführungen 25 in Führungsblöcken 24 an dem Rahmengestänge 12 geführt. Die durch die Führungsblöcke 24 verlaufenden Gestängeführungen 25 weisen eine lichte Weite auf, die im Wesentlichen dem Außendurchmesser einer Rahmenstange entspricht.

Den einzelnen Filterkonsolen 19, 20, 21 und 22 sind Konsolenhandhaben 42 zugeordnet. Nach dem Anheben mittels der Hubvorrichtung 15 können die Filterkonsolen 19, 20, 21 und 22 einzeln in Ausfahrrichtung 41 seitlich aus der Durchströmrichtung 35 der Filteranlage 10 herausgezogen werden.

In die einzelnen Filterkonsolen 19, 20, 21 und 22 sind Filtermaterialbehältnisse 26, 26a, 26b und 26c eingesetzt. Die Filtermaterialbehältnisse 26, 26a, 26b und 26c sind vorzugsweise topfförmig ausgebildet und weisen eine Einlauföffnung 36 und eine Auslauföffnung 37 auf. Sie sind in Einbaulage oben mit einem Haltekragen 27 und unten mit einem, eine Absatzkante 32 aufweisenden Absatz 34 versehen.

Die Filtermaterialbehältnisse 26, 26a, 26b und 26c sind mit ihren Absätzen 34 ihrer Absatzkanten 32 in den Haltekragen 27 des jeweils nächst folgenden Filtermaterialbehältnisses 26, 26a, 26b oder 26c dichtend eingeführt. Den Absatzkanten 32 sind dazu O-Ringe 33 zugeordnet.

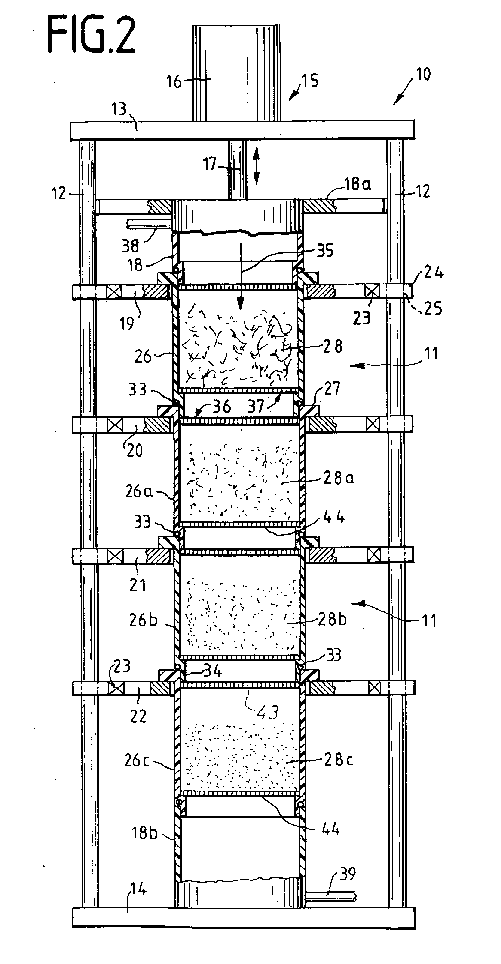

Wie die Figur 2 zeigt, ist in jedes der Filtermaterialbehältnisse 26, 26a, 26b und 26c ein anderes Filtermaterial 28, 28a, 28b bzw. 28c eingefüllt. Die Filtermaterialien 28, 28a, 28b und 28c in einem Filtermaterialbehältnis 26, 26a, 26b und 26c sind jeweils einheitlich. Untereinander weisen die Filtermaterialbehältnisse 26, 26a, 26b und 26c Filtermaterialien 28, 28a, 28b und 28c einer unterschiedlichen Kornfraktion oder chemischen Eigenschaft auf.

Üblicherweise ist das in Durchströmrichtung 35 oberste Filtermaterial 28 grobkörniger als das nächstfolgende Filtermaterial 28a, während dieses wiederum gröber als das danach folgende Filtermaterial 28b ist. Eines der Filtermaterialien ist üblicherweise chemisch reaktiv; vorzugsweise besteht das in Durchströmrichtung 35 letzte Filtermaterial 28c aus Aktivkohle.

Die Einlauföffnungen 36 an den Oberseiten der einzelnen Filtermaterialbehältnisse 26, 26a, 26b und 26c sind mit oberen Abdecksieben 43 abgeschlossen und können von Wasser durchströmt werden. Die Maschenweite der Abdecksiebe 43 ist dabei kleiner als die Korngröße des jeweils eingefüllten Filtermaterials 28, 28a, 28b oder 28c.

Die Auslauföffnungen 37 an den Unterseiten der Filtermaterialbehältnisse 26, 26a, 26b und 26c sind mit unteren Abdecksieben 44 ebenfalls wasserdurchlässig abgeschlossen. Die Maschenweiten der unteren Abdecksiebe 44 sind ebenfalls kleiner als die Korngröße des in dem Filtermaterialbehältnis 26, 26a, 26b oder 26c jeweils eingefüllten und bereit gehaltenen Filtermaterials 28, 28a, 28b oder 28c.

Wie die Figur 3 weiter zeigt, kann die Filteranlage 10 geöffnet werden. Dazu können die einzelnen Filtermodule 11 von der Hubvorrichtung 15 um eine bestimmte Hubhöhe 31 axial angehoben und auseinander gezogen werden. Die Filtermodule 11 sind dazu mit seitlichen Mitnehmern 29 versehen, die mit Mitnehmeraufnahmen 30 nacheinander in Wirkverbindung gebracht werden können.

Nachdem die Filtermodule 11 mittels der Hubvorrichtung 15 um die Hubhöhe 31 gegen die Durchströmrichtung 35 auseinander gezogen worden sind, können die Filterkonsolen 19, 20, 21 und 22 an den Konsolenhandhaben 42 in Ausfahrrichtung 41 seitlich aus dem Rahmengestänge 12 herausgezogen werden.

Nachdem die Filterkonsolen 19, 20, 21 und 22 aus dem Rahmengestänge 12 heraus gezogen worden sind, können die Filtermaterialbehältnisse 26, 26a, 26b und 26c heraus genommen und ausgewechselt werden. Nach dem Auswechseln der Filtermaterialbehältnisse 26, 26a, 26b und 26c können die Filtermodule 11 mittels der Hubvorrichtung 15 wieder zusammengefahren und die Filteranlage 10 so wieder geschlossen werden.

Den einzelnen Filtermaterialbehältnissen 26, 26a, 26b und 26c sind im Bereich ihrer Haltekragen 27 lösbare Handhabungsmittel 40 zugeordnet. Die Handhabungsmittel 40 können beispielsweise quer verlaufende Haltestangen sein, die in die Haltekragen 27 eingesetzt werden können. Mittels der Handhabungsmittel 40 können die jeweiligen Filtermaterialbehältnisse 26, 26a, 26b und 26c aus ihren Filterkonsolen 19, 20, 21 oder 22 herausgehoben und durch neue ersetzt werden.

Durch diese modulare Aufbauweise der Filteranlage 10 ist ein einfaches Auswechseln der Filtermaterialbehältnisse 26, 26a, 26b und 26c bzw. der Filtermaterialien 28, 28a, 28b bzw. 28c in den einzelnen Filtermodulen 11 möglich.

Die Filtermaterialbehältnisse 26, 26a, 26b und 26c sind in sich abgeschlossen und beinhalten ein weitgehend einheitliches, homogenes Filtermaterial 28, 28a, 28b bzw. 28c. Eine Durchmischung der Filtermaterialien 28, 28a, 28b bzw. 28c bei Rückspülung wird dadurch vermieden. Eine direkte Gegenspülung, bei der Spülwasser entgegen der Durchströmrichtung 35 durch die Filteranlage 10 geleitet werden muss, kann so wirksam vermieden werden.

### Bezugszeichen

- 10: Filteranlage
- 11: Filtermodul
- 12: Rahmengestänge
- 13: Kopfplatte
- 14: Bodenplatte
- 15: Hubvorrichtung
- 16: Hubzylinder
- 17: Hubstange
- 18: oberer Wasserkasten
- 18a: Wasserkastenabdeckung
- 18b: unterer Wasserkasten
- 19, 20, 21, 22: Filterkonsole
- 23: Konsolenführung
- 24: Führungsblock
- 25: Gestängeführung
- 26, 26a, 26b, 26c: Filtermaterialbehältnis
- 27: Haltekragen
- 28, 28a, 28b, 28c: Filtermaterial
- 29: Mitnehmer
- 30: Mitnehmeraufnahme
- 31: Hubhöhe
- 32: Absatzkante
- 33: O-Ring
- 34: Absatz
- 35: Durchströmrichtung
- 36: Einlauföffnung
- 37: Auslauföffnung
- 38: Wasserzulauf
- 39: Wasserablauf
- 40: Handhabungsmittel
- 41: Ausfahrrichtung
- 42: Konsolenhandhabe
- 43: oberes Abdecksieb
- 44: unteres Abdecksieb

## Patentansprüche

1. Filteranlage zum Filtern von Flüssigkeiten, insbesondere von Wässern in Badeanlagen, Swimmingpools, Schwimmbädern und dergleichen, bestehend aus einer Vielzahl von Schichten unterschiedlich grobem und/oder reaktivem Filtermaterial, das in Durchströmrichtung von dem zu filternden Wasser nacheinander zu durchströmen ist, **dadurch gekennzeichnet, dass** jedes Filtermaterial (28, 28a, 28b, 28c) in einem Filtermodul (11) mit jeweils einem eigenen Filtermaterialbehältnis (26, 26a, 26b, 26c) bereit gehalten ist, die Filtermodule (11) in Reihe hintereinander angeordnet sind und die einzelnen Filtermaterialbehältnisse (26, 26a, 26b, 26c) aus den Filtermodulen (11) entnehmbar sind.

2. Filteranlage nach Anspruch 1, **dadurch gekennzeichnet, dass** die Filtermodule (11) separat ausfahrbare Filterkonsolen (19, 20, 21, 22) aufweisen, die in einem Rahmengestänge (12) angeordnet und in Durchströmrichtung (35) axial verschiebbar sind.

3. Filteranlage nach den Ansprüchen 1 und 2, **dadurch gekennzeichnet, dass** dem obersten Filtermodul (11) ein oberer Wasserkasten (18) mit einem Wasserzulauf (38) und dem untersten Filtermodul (11) ein unterer Wasserkasten (18b) mit einem Wasserablauf (39) zugeordnet ist.

4. Filteranlage nach den Ansprüchen 1 bis 3, **dadurch gekennzeichnet, dass** die Filtermaterialbehältnisse (26, 26a, 26b, 26c) mit Haltekragen (27) in die Filterkonsolen (19, 20, 21, 22) herausnehmbar eingehängt sind und die Filtermaterialbehältnisse (26, 26a, 26b, 26c) an ihren den Haltekragen (27) entgegen gesetzten Unterseiten Absätze (34) aufweisen, mit denen sie abgedichtet ineinander einfahrbar sind.

5. Filteranlage nach den Ansprüchen 1 bis 4, **dadurch gekennzeichnet, dass** die Rahmengestänge (12) an ihren oberen Enden eine Deckplatte (13) aufweisen und der Deckplatte (13) eine Hubvorrichtung (15) zugeordnet ist, mit der die Filtermodule (11) in dem Rahmengestänge (12) axial verschiebbar sind.

6. Filteranlage nach den Ansprüchen 1 und 5, **dadurch gekennzeichnet, dass** die Hubvorrichtung (15) einen Hubzylinder (16) aufweist, mit dem die Filtermodule (11) um eine zwischen ihnen vorgesehene Hubhöhe (31) axial verschiebbar sind, wobei die Hubhöhe (31) größer als die Höhe der Absätze (34) der Filtermaterialbehältnisse (26, 26a, 26b, 26c) ist.

7. Filteranlage nach den Ansprüchen 1 bis 6, **dadurch gekennzeichnet, dass** den Filterkonsolen (19, 20, 21, 22) Mitnehmer (29) und mit diesen in Wirkverbindung bringbare Mitnehmeraufnahmen (30) zugeordnet sind.

8. Filteranlage nach den Ansprüchen 1 bis 7, **dadurch gekennzeichnet, dass** den Filtermaterialbehältnissen (26, 26a, 26b, 26c) Handhabungsmittel (40) zugeordnet sind.

9. Filteranlage nach den Ansprüchen 1 und 8, **dadurch gekennzeichnet, dass** die Handhabungsmittel (40) im Bereich der Haltekragen (27) lösbar mit den Filtermaterialbehältnissen (26, 26a, 26b, 26c) verbunden sind.
